# EUROPÄISCHE PATENTSCHRIFT

(11) **EP 2 473 383 B1**
(45) Veröffentlichungstag und Bekanntmachung des Hinweises auf die Patenterteilung: **20.04.2016**
(21) Anmeldenummer: 10732941.9
(22) Anmeldetag: 13.07.2010
(51) Int. Cl.: B60S 1/08

(54) **SCHEIBENWISCHERVORRICHTUNG UND VERFAHREN ZUM BETREIBEN EINER SOLCHEN SCHEIBENWISCHERVORRICHTUNG**
WINDSHIELD WIPING DEVICE AND METHOD FOR THE OPERATION THEREOF
SYSTEME D'ESSUIE-GLACE ET PROCEDE POUR FAIRE FONCTIONNER LEDIT SYSTEME

(30) Priorität: 02.09.2009 DE 102009029098
(43) Veröffentlichungstag der Anmeldung: 11.07.2012
(73) Patentinhaber: Robert Bosch GmbH, 70442 Stuttgart (DE)
(72) Erfinder: ZIMMER, Joachim, 77880 Sasbach (DE)
(86) Internationale Anmeldenummer: PCT/EP2010/060010
(87) Internationale Veröffentlichungsnummer: WO 2011/026679

(56) Entgegenhaltungen:
- EP-A2- 1 321 338
- EP-A2- 1 447 288
- WO-A1-02/076796
- DE-A1- 10 009 797
- DE-A1- 19 741 630
- DE-A1-102005 013 591
- DE-A1-102006 061 631
- JP-A- 2003 002 173

## Beschreibung

Die Erfindung betrifft eine Scheibenwischervorrichtung mit einem Wischermotor, welcher mittels einer Steuereinrichtung ansteuerbar ist und einen Wischer betätigt, um ein vorbestimmtes Wischfeld zu überstreichen. Die Erfindung betrifft ferner ein Verfahren zum Betreiben einer solchen Scheibenwischervorrichtung.

### Stand der Technik

Scheibenwischervorrichtungen zur Reinigung von Kraftfahrzeugscheiben umfassen in der Regel einen Wischermotor, der einen Wischer relativ zu der Kraftfahrzeugscheibe bei Regen bzw. Feuchtigkeit bewegt. Der Wischermotor ist im Allgemeinen als ein Zwei-Hebel-Gleichlauf-Wischersystem mit einem separaten Wischer für Fahrer- und Beifahrerseite ausgebildet. Der Wischermotor legt das Wischfeld über den Wischkreis des Wischers sowie dessen Umkehrlage fest. Für die Auslegung der Wischfeldgröße gibt es gesetzliche Vorschriften. Diese bestimmt die wesentlichen Randbedingungen insbesondere für das fahrerseitige Wischfeld. Das Wischfeld der Fahrerseite wird durch den Wischermotor in der Regel konstant gehalten, um einen möglichst kleinen A-Säulenabstand, ein großes Wischfeld und die gesetzlichen Sichtfelderfordernisse zu erfüllen.

Auf der Beifahrerseite ist dagegen nur der Wischkreis fest vorgegeben. Beim Einstellen der oberen Umkehrlage besteht ein relativ großer Spielraum, da keine gesetzlichen Anforderungen an das Sichtfeld vorliegen. Auf der Beifahrerseite bestehen dabei zwei Auslegungsrichtungen, wobei etwa bei der Hälfte aller Kunden eine der beiden Auslegungen zur Anwendung kommt. Gemäß einer ersten Auslegung wird ein großer Wischwinkel vorgegeben. Bei einem großen Wischwinkel wischt der Wischkreis der Beifahrerseite in das fahrerseitige Wischfeld hinein.

Dies kann störend auf den Fahrer wirken, insbesondere bei einer großen Wassermenge, wenn zusätzlich Wasser in das Fahrersichtfeld geschleudert wird. Gemäß einer zweiten Auslegung wird ein kleiner Wischwinkel vorgegeben. Bei einem kleinen Wischwinkel erfolgt die Umkehrlage des beifahrerseitigen Wischers frühzeitig. Dadurch kann das vom beifahrerseitigen Wischer abgelegte Wasser in der Umkehrlage nicht vom fahrerseitigen Wischer entfernt werden, so dass Wasser nach dem Abschalten des Wischermotors nach unten in das Sichtfeld des Fahrers läuft.

DE 100 09 797 A1 beschreibt eine Scheibenwischervorrichtung sowie ein Verfahren zum Wischen von Scheiben, mit mindestens einem in seiner Drehrichtung änderbaren Motor und wenigstens einem mit dem Motor gekoppelten, zwischen zwei Umkehrlagen pendelnden Wischer, mit einer den Motor mittels Schaltsignalen schaltenden Steuerung und mit der Steuerung zugeführten Betriebssignalen, wobei die Steuerung aus den Betriebssignalen die Schaltsignale und somit die Umkehrlagen des Wischers bestimmt. Das Wischfeld des Wischers wird abhängig von einem Umgebungs- und Wischer-Parameter eingestellt.

DE 10 2006 061 631 A1 offenbart eine Vorrichtung zum Einstellen einer Parklage eines Wischerarms in einer Wischeranlage. Die Vorrichtung umfasst einen Wischerarm und eine Steuereinheit zum Einstellen einer ersten Parklage, auf die der Wischerarm in einem nicht aktivierten Zustand der Wischeranlage eingestellt wird. Die Steuereinheit stellt den Wischerarm im nicht aktivierten Zustand der Wischeranlage abhängig von Umgebungszuständen und/oder erwarteten Umgebungszuständen auf eine zweite Parklage ein.

Aus WO 02/076796 A1 ist eine Wischeranlage mit zwei Scheibenwischern und zwei Wischermotoren bekannt, die Scheibenwischer antreiben und von denen mindestens ein Wischermotor mit einer elektronischen Steuereinheit eine Baueinheit bildet, wobei der zweite Wischermotor als Rundläufermotor ausgebildet ist und nur eine Sensorik zum Erfassen der absoluten und relativen Drehlage seiner Abtriebswelle besitzt, wobei die Abtriebswelle entsprechend die Signale für die Steuereinheit des ersten Wischermotors bezeugt und der erste Wischermotor durch die Steuereinheit in Abhängigkeit der Drehlage in der Drehgeschwindigkeit der Abtriebswelle des zweiten Wischermotors in der Drehgeschwindigkeit und der Drehlage seiner Abtriebswelle geregelt wird.

### Offenbarung der Erfindung

Aufgabe der Erfindung ist es, eine optimierte Lösung für eine Scheibenwischervorrichtung zu finden.

Die Aufgabe der Erfindung wird durch eine Scheibenwischervorrichtung nach Anspruch 1 sowie einem Verfahren zum Betreiben einer Scheibenwischervorrichtung nach Anspruch 6 gelöst. Weitere vorteilhafte Ausführungsformen der Erfindung sind in den abhängigen Ansprüchen angegeben.

Erfindungsgemäß wird eine Scheibenwischervorrichtung mit einem Wischermotor offenbart, welche mittels einer Steuerungseinrichtung ansteuerbar ist und einen Wischer betätigt, um ein vorbestimmtes Wischfeld zu überstreichen. Dabei stellt die Steuerungseinrichtung das Wischfeld des Wischers abhängig von einem Umgebungs- und/oder Wischer-Parameter ein. In einer der erfindungsgemäßen Ausführungsform ist die Scheibenwischervorrichtung als Zwei-Motoren-Scheibenwischervorrichtung ausgebildet, wobei die beiden Wischermotoren getrennt ansteuerbar sind, um das Wischfeld des zugehörigen Wischers individuell einzustellen. Dadurch kann das Wischfeld auf der Fahrerseite und Beifahrerseite separat eingestellt werden, um dem Fahrer eine störungsfreie Sicht auf die Fahrbahn zu ermöglichen. Die erste Wischwinkeleinstellung umfasst einen Wischwinkel von 90 Grad und eine zweite Wischwinkeleinstellung einen Wischwinkel von über 90 Grad. Die Verwendung der beiden Wischwinkeleinstellungen ermöglicht eine optimale Anpassung des Wischervorgangs an die auf die Scheibe auftreffende Wassermenge.

Gemäß einer weiteren Ausführungsform der Erfindung ist der Wischwinkel einer ersten Wischwinkeleinstellung um wenigstens 3 Grad kleiner als der Wischwinkel einer zweiten Wischwinkeleinstellung.

Ein Vorteil der erfindungsgemäßen Scheibenwischervorrichtung ist, dass durch die Berücksichtigung der Umgebungs- und Wischer-Parameter bei der Festlegung des Wischerfelds abhängig von der Situation ein adaptives Wischfeld eingestellt werden kann. Ferner wird der Zeitanteil mit störungsfreier Sicht des Fahrers auf die Fahrbahn beim Wischbetrieb erhöht. Dies wird besonders dadurch erreicht, dass die Ablage des Wassers mit Hilfe der Wischersteuerung erfindungsgemäß optimiert wird.

Ferner wird gemäß einer weiteren Ausführungsform der Erfindung beim Ausschalten des Wischers die zweite Wischwinkeleinstellung ausgeführt. Der Einsatz der zweiten Wischwinkeleinstellung beim Ausschalten des Wischers ist als eine Zusatzanwendung vorgesehen. Dabei wird gewährleistet, dass beim letzten Wischen die ganze Wassermenge auf der Fahrerseite entfernt wird.

Die Erfindung wird im Folgenden anhand von Ausführungsbeispielen unter Bezugnahme auf die beigefügten Zeichnungen näher erläutert. In den Zeichnungen zeigen:
- Fig. 1: eine schematische Darstellung einer Scheibenwischervorrichtung; und
- Fig. 2: einen möglichen Betriebsablauf der erfindungsgemäßen Scheibenwischervorrichtung vom Einschalten bis zum Ausschalten.

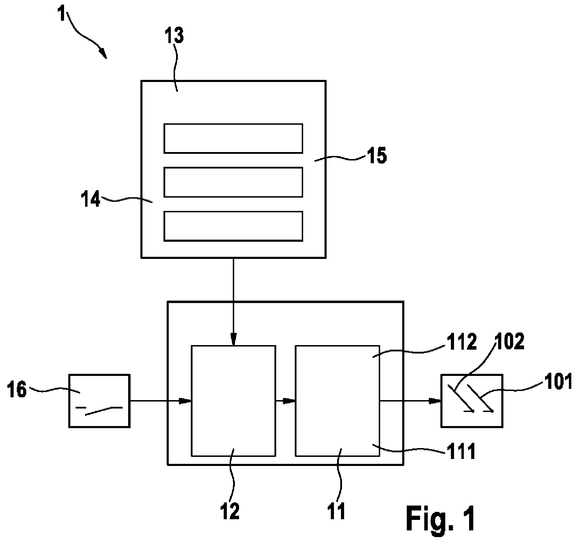

In Figur 1 ist in einer schematischen Darstellung eine Scheibenwischervorrichtung 1 gezeigt. Die Scheibenwischervorrichtung 1 dient zur Reinigung von Kraftfahrzeugscheiben und umfasst ein Wischermotorsystem 11, der zwei Wischer 101, 102 vorzugsweise im Gleichlauf relativ zu der Kraftfahrzeugscheibe bei Regen bzw. Feuchtigkeit bewegt. Das Wischermotorsystem 11 ist als Zwei-Motoren-System ausgebildet, wobei die beiden Wischermotoren 111, 112 getrennt ansteuerbar sind. Die beiden Wischermotoren 111, 112 betreiben die zugehörigen Wischer 101, 102 mit einem Kompaktgestänge oder als ein Wischerdirektantrieb. Durch die getrennten Wischermotoren 111, 112 kann der Wischerbetrieb auf der Fahrerseite und Beifahrerseite voneinander entkoppelt werden, um das Wischfeld des zugehörigen Wischers 101, 102 individuell einzustellen. Alternativ können bei dem Wischermotorsystem 11 die Wischermotoren 111, 112 auch gegenläufig arbeiten.

Der fahrerseitige Wischermotor 111 hält den Wischkreis sowie dessen Umkehrlage an der A-Säule auf der Fahrerseite konstant. Mit dem beifahrerseitigen Wischermotor 112 wird der Wischkreis des beifahrerseitigen Wischers 102 konstant gehalten. Das Festlegen der oberen Umkehrlage des beifahrerseitigen Wischers 102 lässt einen relativ großen Spielraum, da für das Wischfeld auf der Beifahrerseite im Wesentlichen gesetzliche Sichtfelderfordernisse bestehen. Das Wischfeld auf der Beifahrerseite kann so erfindungsgemäß während dem Wischerbetrieb optimiert werden. Es besteht zudem die Möglichkeit auch das Wischfeld auf der Fahrerseite erfindungsgemäß zu optimieren, wenn die gesetzlichen Vorschriften es zulassen.

Die beiden Wischermotoren 111, 112 sind mithilfe einer Steuerungseinrichtung 12 steuerbar. Dabei stellt die Steuerungseinrichtung 12 das Wischfeld der Beifahrerseite erfindungsgemäß abhängig von einem Umgebungs- und/oder Wischer-Parameter 13, 14 ein. Der Wischer-Parameter 13 kann eine Wischergeschwindigkeit und/oder einen Betriebsmodus und der Umgebungs-Parameter 14 kann eine Wassermenge und/oder Fahrgeschwindigkeit umfassen. Alternativ können weitere Umgebungs- und/oder Wischer-Parameter 13, 14 erfasst werden. Die Steuerungseinrichtung 12 kann dabei entweder eine, mehrere oder alle Umgebungs- und/oder Wischer-Parameter 13, 14 berücksichtigen.

Die Wischer-Parameter 13 Wischergeschwindigkeit und/oder Betriebsmodus, wobei unter dem Betriebsmodus unter anderem der Ein- und Ausschaltvorgang der Wischer 101, 102 zu verstehen ist, können manuell über den LenkstockSchalter 16 und/oder über einen Regensensor 24 im Bordnetz 15 aktiviert werden. Die Daten werden anschließend über die Steuerungseinrichtung 12 verarbeitet. Beim Ein- und Ausschalten der Wischer 101, 102 wird der Wischer 101, 102 aus einer bzw. in eine Parkposition gebracht. Der Umgebungs-Parameter 14 Fahrgeschwindigkeit kann über das Bordnetz 15 eingestellt werden. Der Umgebungs-Parameter 14 Wassermenge wird über den Regensensor 24 und/oder über ein Energiemodell im Bordnetz 15 ermittelt.

Mit dem Regensensor 24 oder dem Energiemodell kann festgestellt werden, ob und wie stark es regnet, um die beiden Wischermotoren 111, 112 über die Steuerungseinrichtung 12 zu aktivieren. Der Regensensor 24 führt eine optoelektronischen Messung mithilfe einer Leuchtdiode (LED) als Lichtquelle und einer detektierenden Fotodiode durch. Dabei wird die physikalische Gesetzmäßigkeit der Reflektion an der Grenze vom optisch dichten zum optisch dünneren Material (Brechzahl) genutzt. Mit dem Energiemodell kann eine Last auf dem Wischermotor 111, 112 erkannt werden. Hieraus wird das Wischfeld bzw. die Drehzahl des Wischers 101, 102 durch die Steuerungseinrichtung 12 des Wischermotors 111, 112 bestimmt.

Der Vorteil der erfindungsgemäßen Scheibenwischervorrichtung 1 ist, dass durch die Berücksichtigung der Umgebungs- und/oder Wischer-Parameter 13, 14 bei der Festlegung des Wischfelds abhängig von der Situation ein adaptives Wischfeld auf der Beifahrerseite eingestellt werden kann. Ferner kann die Sicht des Fahrers auf die Fahrbahn beim Wischbetrieb erhöht werden.

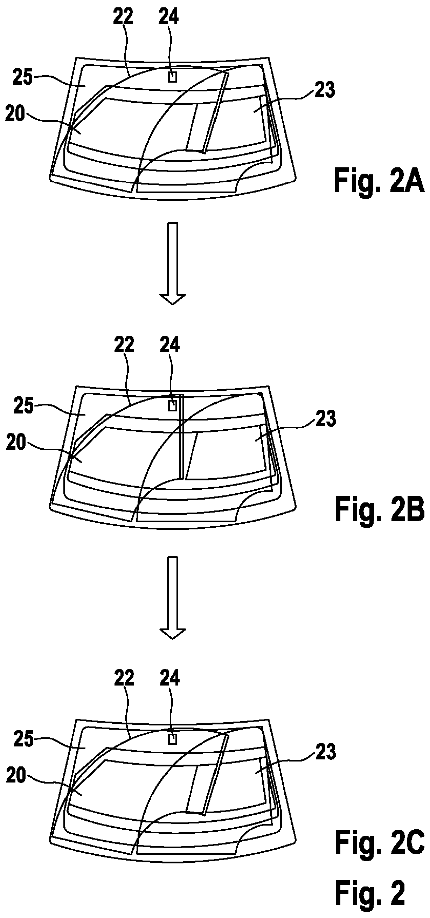

Figur 2A bis 2C zeigen einen möglichen Betriebsablauf der erfindungsgemäßen Scheibenwischervorrichtung 1 vom Einschalten bis zum Ausschalten. Dabei wird von der Steuerungseinrichtung 12 das Wischfeld insbesondere auf der Beifahrerseite 20 abhängig von dem Umgebungs- und/oder Wischer-Parameter 13, 14 eingestellt, wobei eine erste Wischwinkeleinstellung 21 einen Wischwinkel von 90 Grad und eine zweite Wischwinkeleinstellung 22 einen Wischwinkel von über 90 Grad umfasst. Alternativ kann der Wischwinkel größer oder kleiner ausgelegt werden. Bevorzugt ist aber der Wischwinkel der ersten Wischwinkeleinstellung um wenigstens 3 Grad kleiner als der Wischwinkel der zweiten Wischwinkeleinstellung. Für die Bestimmung der ersten und zweiten Wischwinkeleinstellung 21, 22 ist der Regensensor 24 so positioniert, dass die auftreffende Wassermenge rechtzeitig vom Regensensor 24 erkannt wird. Ferner muss der Regensensor 24 vom beifahrerseitigen Wischer 102 immer überstrichen werden.

In einem ersten Betriebszustand werden die beiden Wischer 101, 102 durch ein Einschalten am Lenkstock-Schalter 16 oder durch den Regensensor 24 bzw. das Energiemodell aktiviert. Wie in Figur 2A gezeigt ist, weist der beifahrerseitige Wischer 102 die zweite Wischwinkeleinstellung 22 mit einem Wischwinkel von über 90 Grad auf. Die zweite Wischwinkeleinstellung 22 wird vor allem bei einer kleinen Wischergeschwindigkeit und einer geringen Wassermenge vor der Steuerungseinrichtung 12 eingestellt, da kein oder nur wenig Wasser in das Fahrersichtfeld geschleudert wird. Die zweite Wischwinkeleinstellung 22 ist dabei so groß ausgelegt, dass der Wischkreis der Beifahrerseite 20 immer in das Wischfeld auf der Fahrerseite 23 hineinwischt. Jedoch wird das von dem beifahrerseitigen Wischer 102 abgelegte Wasser in der Umkehrlage beim Abwärtswischen der Fahrerseite 23 vollständig entfernt. Dadurch läuft kein Wasser nach dem Ausschalten der beiden Wischer 101, 102 in das Sichtfeld des Fahrers. Dies ist insbesondere bei einer geringen Fahrgeschwindigkeit oder im Stand vom Vorteil, da aufgrund fehlender Anströmung das Wasser nicht über das Dach abgeführt wird. Bei einem plötzlich stark auftretenden Regen mit einer großen Wassermenge wird sofort die erste Wischwinkeleinstellung 21 mit einem Wischwinkel von 90 Grad von der Steuerungseinrichtung 12 eingestellt, um die Sicht des Fahrers nicht zu behindern.

Wie in Figur 2B gezeigt ist, wird bei einem zweiten Betriebszustand, der das Dauerwischen darstellt, die erste Wischwinkeleinstellung 21 mit einem Wischwinkel von 90 Grad durch die Steuerungseinrichtung 12 eingestellt. Die erste Wischwinkeleinstellung 21 wird vor allem bei einer hohen Wischergeschwindigkeit, einer großen Wassermenge und einer hohen Fahrgeschwindigkeit verwendet. Dabei erfolgt die Umkehrlage des beifahrerseitigen Wischers 102 frühzeitig, so dass der beifahrerseitige Wischer 102 nicht in das Fahrersichtfeld hineinragt und störend auf den Fahrer wirkt. Bei großen Wassermengen wird zusätzlich Wasser von dem beifahrerseitigen Wischer 102 in das Fahrersichtfeld geschleudert, wodurch die Sicht stark beeinträchtigt wird. Durch die Reduzierung des Wischwinkels wird der beeinträchtigte Sichtbereich verkleinert. Ferner werden eine kleinere relative Wischergeschwindigkeit und damit eine kleinere Dynamik erreicht, so dass die Wassermenge weniger weit vom beifahrerseitigen Wischer 102 auf das Sichtfeld des Fahrers geschleudert wird. Aufgrund der frühzeitigen Umkehrlage des beifahrerseitigen Wischers 102 und der geringen Wassermenge auf der Fahrerseite 23, kann die Sicht des Fahrers auf die Fahrbahn beim Wischerbetrieb verbessert werden.

Beim Ausschalten der beiden Wischer 101, 102, das in Figur 2C als dritter Betriebszustand gezeigt ist, werden die beiden Wischer 101, 102 in eine Parkposition gebracht. Dabei wird beim Dauerwischen des beifahrerseitigen Wischers 102 von der ersten Wischwinkeleinstellung 21 auf die zweite Wischwinkeleinstellung 22 umgeschaltet. Das Ausschalten der beiden Wischer 101, 102 in die Parkposition wird durch das Betätigen des Lenkstock-Schalters 16 oder über den Regensensor 24 im Bordnetz 13 aktiviert. Das vom beifahrerseitigen Wischer 102 in der Umkehrlage abgelegte Wasser wird dadurch beim Abwärtswischen der Fahrerseite 23 vollständig entfernt, so dass kein Wasser nach Ausschalten der beiden Wischer 101, 102 nach unten ins Sichtfeld des Fahrers läuft.

In einem weiteren in Figur 2C nicht gezeigten Betriebszustand kann bei einem Intervallwischen immer die zweite Wischwinkeleinstellung 22 für den beifahrerseitigen Wischer 102 durch die Steuerungseinrichtung 12 eingestellt werden. Beim Intervallwischen befindet sich auf der Windschutzscheibe 25 nur eine geringe Wassermenge, so dass vorzugsweise in bestimmten Abständen gewischt wird. Dadurch kann eine störungsfreie Sicht des Fahrers auf die Fahrbahn beim Wischerbetrieb erhöht werden.

Durch die Verwendung eines Wischermotorsystems 11 als Zwei-Motoren-System mit einem Wischermotor 111, 112 für die Fahrer- und Beifahrerseite, kann das Wischfeld des beifahrerseitigen Wischers 102 optimiert werden. Dadurch wird der Zeitanteil mit störungsfreier Sicht des Fahrers auf die Fahrbahn beim Wischbetrieb erhöht.

## Patentansprüche

1. Scheibenwischervorrichtung mit einem Wischermotor (11), welcher mittels einer Steuerungseinrichtung (12) ansteuerbar ist und einen Wischer (101, 102) betätigt, um ein vorbestimmtes Wischfeld zu überstreichen, wobei die Steuerungseinrichtung (12) das Wischfeld des Wischers (101, 102) abhängig von einem Umgebungs- und/oder Wischer-Parameter (13, 14) einstellt, wobei die Scheibenwischervorrichtung (1) als Zwei-Motoren-Scheibenwischervorrichtung ausgebildet ist, wobei die beiden Wischermotoren (111, 112) getrennt ansteuerbar sind, um das Wischfeld des zugehörigen Wischers (101, 102) individuell einzustellen, wobei die Scheibenwischvorrichtung ausgebildet ist, um abhängig von Umgebungs- und/oder Wischer-Parameter (13, 14) das Wischfeld auf der Beifahrerseite auf eine erste oder zweite Wischwinkeleinstellung (21, 22) einzustellen, wobei die erste Wischwinkeleinstellung (21) einen Wischwinkel von 90° und die zweite Wischwinkeleinstellung (22) einen Wischwinkel von über 90° umfasst, wobei die Scheibenwischvorrichtung ausgebildet ist, um bei einer geringen Wassermenge die zweite Wischwinkeleinstellung (22) auf der Beifahrerseite einzustellen, wobei die zweite Wischwinkeleinstellung (22) größer als die erste Wischwinkeleinstellung (21) ist, wobei in der zweiten Wischwinkelstellung der Wischkreis des Wischers der Beifahrerseite (20) immer in das Wischfeld der Fahrerseite (23) hineinwischt, und wobei bei einer größeren Wassermenge auf der Beifahrerseite die erste Wischwinkeleinstellung (21) mit einem Winkel von 90° eingestellt wird.

2. Scheibenwischervorrichtung nach Anspruch 1, **dadurch gekennzeichnet, dass** der Wischer-Parameter (13) eine Wischergeschwindigkeit und/oder einen Betriebsmodus und der Umgebungs-Parameter (14) eine Wassermenge und/oder eine Fahrgeschwindigkeit umfasst.

3. Scheibenwischervorrichtung nach einem der Ansprüche 1 oder 2, **dadurch gekennzeichnet, dass** der Wischwinkel einer ersten Wischwinkeleinstellung (21) um wenigstens 3 Grad kleiner ist als der Wischwinkel einer zweiten Wischwinkeleinstellung (22).

4. Scheibenwischervorrichtung nach einem der Ansprüche 1 bis 3 ,**dadurch gekennzeichnet, dass** beim Ausschalten des Wischers (102) die zweite Wischwinkeleinstellung (22) ausgeführt ist.

5. Scheibenwischvorrichtung nach einem der Ansprüche 1 bis 4, **dadurch gekennzeichnet, dass** die Scheibenwischvorrichtung ausgebildet ist, um vor dem Fahren der beiden Wischer in eine Parkposition der beifahrerseitige Wischer von der ersten Wischwinkeleinstellung in die zweite Wischwinkeleinstellung umgeschaltet wird.

6. Verfahren zum Betreiben einer Scheibenwischervorrichtung (1), wobei ein Wischer (101, 102) ein vorbestimmtes Wischfeld überstreicht, wobei das Wischfeld abhängig von einem Umgebungs- und/oder Wischer-Parameter (13, 14) eingestellt wird, wobei der Wischer-Parameter (13) eine Wischgeschwindigkeit und/oder einen Betriebsmodus und der Umgebungs-Parameter (14) eine Wassermenge und/oder eine Fahrgeschwindigkeit umfasst, wobei bei einer geringen Wassermenge eine zweite Wischwinkeleinstellung (22) auf der Beifahrerseite eingestellt wird, wobei die zweite Wischwinkeleinstellung (22) größer als eine erste Wischwinkeleinstellung (21) ist, wobei die erste Wischwinkeleinstellung (21) einen Wischwinkel von 90° und die zweite Wischwinkeleinstellung (22) einen Wischwinkel von über 90° umfasst, wobei in der zweiten Wischwinkeleinstellung der Wischkreis der Beifahrerseite (20) immer in das Wischfeld der Fahrerseite (23) hineinwischt, wobei bei einer größeren Wassermenge auf der Beifahrerseite die erste Wischwinkeleinstellung (21) mit einem Winkel von 90° eingestellt wird.

7. Verfahren nach Anspruch 6, **dadurch gekennzeichnet, dass** der Wischwinkel einer ersten Wischwinkeleinstellung (21) um wenigstens 3 Grad kleiner ist als der Wischwinkel einer zweiten Wischwinkeleinstellung (22).

8. Verfahren nach einem der Ansprüche 6 oder 7, **dadurch gekennzeichnet, dass** beim Ausschalten des Wischers (102) die zweite Wischwinkeleinstellung (22) ausgeführt wird.

9. Verfahren nach einem der Ansprüche 6 bis 8, **dadurch gekennzeichnet, dass** vor dem Fahren der Wischer in eine Parkposition der beifahrerseitige Wischer von der ersten Wischwinkeleinstellung in die zweite Wischwinkeleinstellung umgeschaltet wird.

## Claims

1. Windscreen wiping device with a wiper motor (11) which is activatable by means of a control device (12) and actuates a wiper (101, 102) in order to brush over a predetermined wiping area, wherein the control device (12) sets the wiping area of the wiper (101, 102) depending on an environmental and/or wiper parameter (13, 14), wherein the windscreen wiping device (1) is designed as a twomotor windscreen wiping device, wherein the two wiper motors (111, 112) are activatable separately in order to set the wiping area of the associated wiper (101, 102) individually, wherein the windscreen wiping device is designed in order to set the wiping area on the passenger side to a first or second wiping angle setting (21, 22) depending on environmental and/or wiper parameters (13, 14), wherein the first wiping angle setting (21) comprises a wiping angle of 90° and the second wiping angle setting (22) comprises a wiping angle of more than 90°, wherein the windscreen wiping device is designed in order to set the second wiping angle setting (22) on the passenger side in the event of a small quantity of water, wherein the second wiping angle setting (22) is larger than the first wiping angle setting (21), wherein, in the second wiping angle position, the wiping circle of the wiper of the passenger side (20) always wipes into the wiping area of the driver side (23), and wherein, in the event of a larger quantity of water on the passenger side, the first wiping angle setting (21) with an angle of 90° is set.

2. Windscreen wiping device according to Claim 1, **characterized in that** the wiper parameter (13) comprises a wiper speed and/or an operating mode, and the environmental parameter (14) comprises a quantity of water and/or a driving speed.

3. Windscreen wiping device according to either of Claims 1 and 2, **characterized in that** the wiping angle of a first wiping angle setting (21) is smaller by at least 3 degrees than the wiping angle of a second wiping angle setting (22).

4. Windscreen wiping device according to one of Claims 1 to 3, **characterized in that** the second wiping angle setting (22) is implemented when the wiper (102) is switched off.

5. Windscreen wiping device according to one of Claims 1 to 4, **characterized in that** the windscreen wiping device is designed in order, prior to the moving of the two wipers into a parking position, for the passenger-side wiper to be switched over from the first wiping angle setting into the second wiping angle setting.

6. Method for operating a windscreen wiping device (1), wherein a wiper (101, 102) brushes over a predetermined wiping area, wherein the wiping area is set depending on an environmental and/or wiper parameter (13, 14), wherein the wiper parameter (13) comprises a wiping speed and/or an operating mode, and the environmental parameter (14) comprises a quantity of water and/or a driving speed, wherein, in the event of a small quantity of water, a second wiping angle setting (22) is set on the passenger side, wherein the second wiping angle setting (22) is larger than a first wiping angle setting (21), wherein the first wiping angle setting (21) comprises a wiping angle of 90° and the second wiping angle setting (22) comprises a wiping angle of more than 90°, wherein, in the second wiping angle setting, the wiping circle of the passenger side (20) always wipes into the wiping area of the driver side (23), wherein, in the event of a larger quantity of water on the passenger side, the first wiping angle setting (21) with an angle of 90° is set.

7. Method according to Claim 6, **characterized in that** the wiping angle of a first wiping angle setting (21) is smaller by at least 3 degrees than the wiping angle of a second wiping angle setting (22).

8. Method acording to either of Claims 6 and 7, **characterized in that** the second wiping angle setting (22) is implemented when the wiper (102) is switched off.

9. Method according to one of Claims 6 to 8, **characterized in that**, before the wipers move into a parking position, the passenger-side wiper is switched over from the first wiping angle setting into the second wiping angle setting.

## Revendications

1. Système d'essuie-glace avec un moteur d'essuie-glace (11) pouvant être excité à l'aide d'un dispositif de commande (12) et actionne un essuie-glace (101, 102), pour parcourir un champ d'essuyage prédéterminé, le dispositif de commande (12) réglant le champ d'essuyage de l'essuie-glace (101, 102) en fonction d'un paramètre d'environnement et/ou d'essuie-glace (13, 14), le système d'essuie-glace (1) prenant la forme d'un système d'essuie-glace à deux moteurs, les deux moteurs d'essuie-glace (111, 112) pouvant être excités séparément, pour régler individuellement le champ d'essuyage de l'essuie-glace (101, 102) associé, le système d'essuie-glace étant réalisé pour régler le champ d'essuyage sur le côté du passager sur un premier ou deuxième réglage d'angle d'essuyage (21, 22) en fonction des paramètres d'environnement et/ou d'essuieglace (13, 14), le premier réglage d'angle d'essuyage (21) comprenant un angle d'essuyage de 90° et le deuxième réglage d'angle d'essuyage (22) comprenant un angle d'essuyage dépassant 90°, le système d'essuieglace étant réalisé pour régler le deuxième réglage d'angle d'essuyage (22) sur le côté du passager en cas de quantité d'eau réduite, le deuxième réglage d'angle d'essuyage (22) étant supérieur au premier réglage d'angle d'essuyage (21), le cercle d'essuyage de l'essuie-glace du côté du passager (20) essuyant toujours vers l'intérieur dans le champ d'essuyage du côté conducteur (23) dans la deuxième position angulaire d'essuyage et le premier réglage d'angle d'essuyage (21) étant réglé avec un angle de 90° en cas de quantité d'eau plus importante sur le côté du passager.

2. Système d'essuie-glace selon la revendication 1, **caractérisé en ce que** le paramètre d'essuie-glace (13) comprend une vitesse d'essuie-glace et/ou un mode de fonctionnement et le paramètre d'environnement (14) comprend une quantité d'eau et/ou une vitesse de conduite.

3. Système d'essuie-glace selon l'une quelconque des revendications 1 ou 2, **caractérisé en ce que** l'angle d'essuyage d'un premier réglage d'angle d'essuyage (21) est inférieur d'au moins 3 degrés à l'angle d'essuyage d'un deuxième réglage d'angle d'essuyage (22).

4. Système d'essuie-glace selon l'une quelconque des revendications 1 à 3, **caractérisé en ce que** le deuxième réglage d'angle d'essuyage (22) est réalisé en cas de déconnexion de l'essuie-glace (102).

5. Système d'essuie-glace selon l'une quelconque des revendications 1 à 4, **caractérisé en ce que** le système d'essuie-glace est réalisé pour être commuté du premier réglage d'angle d'essuyage dans le deuxième réglage d'angle d'essuyage, avant le balayage des deux essuie-glace dans une position de stationnement de l'essuieglace du côté du passager.

6. Procédé d'actionnement d'un système d'essuie-glace (1), un essuie-glace (101, 102) parcourant un champ d'essuyage prédéfini, le champ d'essuyage étant réglé en fonction d'un paramètre d'environnement et/ou d'essuie-glace (13, 14), le paramètre d'essuie-glace (13) comprenant une vitesse d'essuyage et/ou un mode de fonctionnement et le paramètre d'environnement (14) comprenant une quantité d'eau et/ou une vitesse de conduite, un deuxième réglage d'angle d'essuyage (22) étant réglé sur le côté du passager en cas de quantité d'eau réduite, le deuxième réglage d'angle d'essuyage (22) étant supérieur à un premier réglage d'angle d'essuyage (21), le premier réglage d'angle d'essuyage (21) comprenant un angle d'essuyage de 90° et le deuxième réglage d'angle d'essuyage (22) comprenant un angle d'essuyage dépassant 90°, le cercle d'essuyage du côté du passager (20) essuyant toujours vers l'intérieur dans le champ d'essuyage du côté conducteur (23) dans le deuxième réglage d'angle d'essuyage, le premier réglage d'angle d'essuyage (21) étant réglé avec un angle de 90° en cas de quantité d'eau plus importante sur le côté du passager.

7. Procédé selon la revendication 6, **caractérisé en ce que** l'angle d'essuyage d'un premier réglage d'angle d'essuyage (21) a au moins 3 degrés de moins que l'angle d'essuyage d'un deuxième réglage d'angle d'essuyage (22).

8. Procédé selon l'une quelconque des revendications 6 ou 7, **caractérisé en ce que** le deuxième réglage d'angle d'essuyage (22) est exécuté en cas de déconnexion de l'essuie-glace (102).

9. Procédé selon l'une quelconque des revendications 6 à 8, **caractérisé en ce que** l'essuie-glace est commuté du premier réglage d'angle d'essuyage dans le deuxième réglage d'angle d'essuyage, avant le balayage dans une position de stationnement de l'essuie-glace du côté du passager.
